# EUROPÄISCHE PATENTANMELDUNG

(11) **EP 3 263 254 A1**
(43) Veröffentlichungstag der Anmeldung: **03.01.2018**
(21) Anmeldenummer: 16176681.1
(22) Anmeldetag: 28.06.2016
(51) Int. Cl.: B23B 51/02, B25D 17/02, B28D 1/14

(54) **BOHRKOPF**

(71) Anmelder: HILTI Aktiengesellschaft, 9494 Schaan (LI)
(72) Erfinder: Meierhofer, Markus, 9472 Grabs (CH); Geirhos, Johannes, 86862 Lamerdingen (DE); Peters, Carsten, 9468 Sax (CH); Bohn, Klaus-Peter, 9486 Schaanwald (LI)
(74) Vertreter: Hilti Aktiengesellschaft Corporate Intellectual Property

(57) **Zusammenfassung**

Ein Bohrkopf hat eine Spitze **12,** eine durch die Spitze **12** verlaufende Hochachse und wenigstens vier Schneiden **10,** die jeweils eine Meißelkante **11** aufweisen. Die Meißelkanten **11** von wenigstens drei der Schneiden **10** sind paarweise verschieden.

## Beschreibung

### GEBIET DER ERFINDUNG

Die vorliegende Erfindung betrifft einen Bohrkopf insbesondere einen Bohrkopf für eine bohrmeißelnde Bearbeitung von Gestein oder mineralischen Bauwerkstoffe.

EP 1604793 A1 beschreibt einen Bohrkopf mit zwei identischen Hauptschneiden und zwei identische Nebenschneiden, welche unter 90 Grad zueinander angeordnet sind. Die meißelnde Wirkung des Bohrkopfs wird hauptsächlich durch die Hauptschneiden und die durch die Hauptschneiden ausgebildete Spitze erreicht. Die Nebenschneiden erleichtern die Bearbeitung von Armierungseisen.

Bohrköpfen mit großem Durchmesser, insbesondere Bohrköpfen mit vier und insbesondere mehr als vier Schneiden, können zu einer Taumelbewegung neigen, welche ein unrundes Bohrloch erzeugen.

### OFFENBARUNG DER ERFINDUNG

Der erfindungsgemäße Bohrkopf hat eine Spitze, eine durch die Spitze verlaufende Hochachse und wenigstens vier Schneiden, die jeweils eine Meißelkante aufweisen. Die Meißelkanten von wenigstens drei der Schneiden sind paarweise verschieden. Die Meißelkanten sind nicht notwendigerweise alle verschieden, jedoch sind wenigstens drei Meißelkanten unterschiedlich ausgebildet. Die in Bezug auf die Meißelkanten asymmetrische Gestalt des Bohrkopfs wirkt der Taumelbewegung entgegen.

Eine Ausgestaltung sieht vor, dass Höhenprofile entlang der Meißelkanten der wenigstens drei Schneiden paarweise verschieden sind. Die Meißelkanten dringen unterschiedlich in den Untergrund ein. Eine erste Meißelkante kann in Schlagrichtung durchgehend höher oder abschnittsweise höher als eine zweite Meißelkante sein.

Eine bevorzugte Ausgestaltung sieht vor, die Schneiden in äquidistanten Winkeln um die Hochachse angeordnet sind. Der Grundkörper des Bohrkopfs ist symmetrisch ausgebildet. Dies begünstigt unter Anderem die mechanische Belastbarkeit des Bohrkopfs. Der Symmetriebruch erfolgt vorzugsweise nur durch die Meißelkanten.

Eine Ausgestaltung sieht vor, dass der Bohrkopf wenigstens zwei Hauptschneiden und wenigstens zwei Nebenschneiden aufweist, wobei die Meißelkante der Hauptschneiden bis zu der Spitze verläuft und die Meißelkante der Nebenschneide in einem radialen Abstand von der Spitze endet. Hauptsächlich erfolgt der Abbau durch die Hauptschneiden, die Nebenschneiden unterstützten den Abbau nur eher entlang des Umfangs des Bohrlochs. Der Bohrkopf mit Haupt- und Nebenschneiden weist bei großen Durchmessern eine höhere Abbauleistung auf, als Bohrköpfe mit vier oder mehr identischen Schneiden.

Bei einem Bohrkopf mit Haupt- und Nebenschneiden können zwei der Nebenschneiden eine unterschiedliche Meißelkante aufweisen, um eine bevorzugte asymmetrische Ausprägung des Bohrkopfs zu erhalten. Eine der Nebenschneiden kann im Mittel gegenüber einer anderen der Nebenschneiden längs der Hochachse versetzt sein. Alternativ oder zusätzlich können zwei der Hauptschneiden eine unterschiedliche Meißelkante aufweisen. Eine der Hauptschneiden kann im Mittel gegenüber einer anderen der Hauptschneiden längs der Hochachse versetzt sein.

Der Bohrkopf kann sechs oder mehr Schneiden aufweisen. Die asymmetrischen Meißelkanten erweisen sich insbesondere bei einem regelmäßig gestalteten Bohrkopf mit einer hohen Anzahl, d.h. mit mehr als sechs Schneiden, als vorteilhaft.

Die Meißelkanten können geradlinig sein.

Ein Bohrer kann den Bohrkopf aufweisen. Der Bohrer hat ferner einen Förderabschnitt, ein Einsteckende mit einer Schlagfläche zum Einleiten von Stoßwellen in den Bohrer. Der Förderabschnitt ist länglich, beispielsweise zylindrisch oder spiralförmig, und entlang der Hochachse angeordnet. Ein Durchmesser des Förderabschnitts ist vorzugsweise etwas geringer als der Durchmesser des Bohrkopfs.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: einen Bohrkopf in einer Draufsicht,
- Fig. 3: den Bohrkopf im Schnitt der Ebene III-III
- Fig. 4: den Bohrkopf im Schnitt in der Ebene IV-IV und gestrichelt in der Ebene III-III
- Fig. 5: den Bohrkopf im Schnitt der Ebene V-V
- Fig. 6: den Bohrkopf im Schnitt der Ebene VI-VI

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

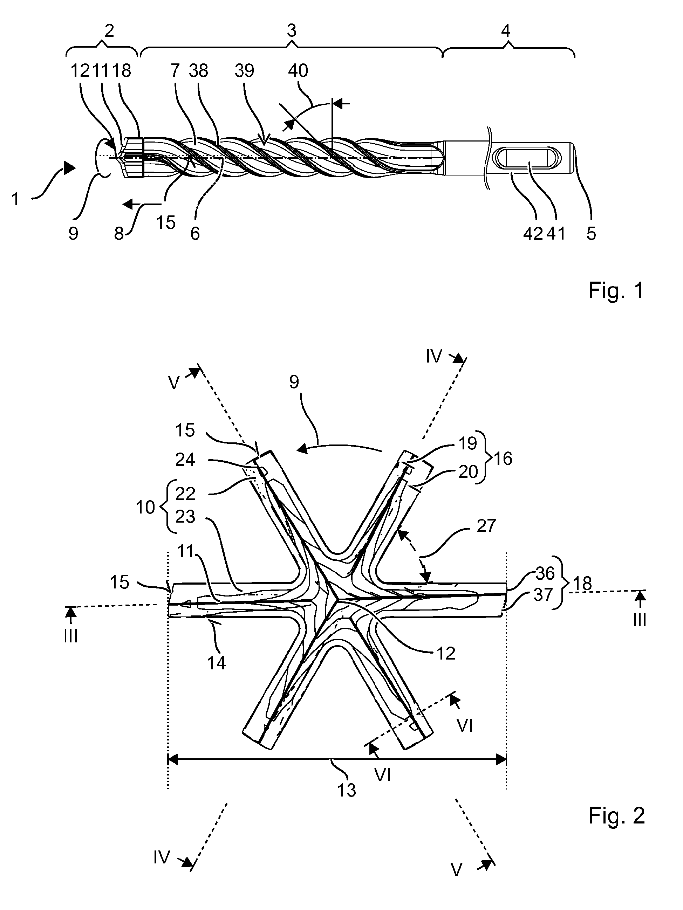

Fig. 1 zeigt einen beispielhaften Bohrer **1.** Der Bohrer **1** hat einen Bohrkopf **2,** einen Förderabschnitt **3,** ein Einsteckende **4** und eine Schlagfläche **5.** Eine Bohrerachse **6** des Bohrers **1** verläuft durch den Bohrkopf **2** und die Schlagfläche **5.** Der Bohrer **1** ist beispielsweise für den Abbau von mineralischen Werkstoffen, z.B. armiertem Beton, ausgelegt. Ein Schlagwerk einer Handwerkzeugmaschine schlägt periodisch auf die Schlagfläche **5** an dem Einsteckende **4.** Die Stoßwelle der Schläge läuft durch die Wendel **7** in Schlagrichtung **8** zu dem Bohrkopf **2.** Der Bohrkopf **2** zertrümmert den Werkstoff. Der Bohrer **1** wird während den Schlägen in einem Drehsinn **9** um seine Bohrerachse **6** gedreht. Die Handwerkzeugmaschine weist einen entsprechenden Drehantrieb auf. Die Drehbewegung stellt sicher, dass der Bohrkopf **2** unter verschiedenen Orientierungen auf den Untergrund aufschlägt und das Bohrloch gleichmäßig ausgeschlagen wird.

Der beispielhafte Bohrkopf **2** hat sechs Schneiden **10,** die sternförmig um eine Hochachse **6** angeordnet sind. Die Schneiden **10** haben an ihrer in Schlagrichtung **8** weisenden Seite jeweils eine Meißelkante **11,** welche in radialer Richtung auf eine Spitze **12** des Bohrkopfs **2** zuläuft. Die einzige Spitze **12** des Bohrkopfs **2** liegt auf der Hochachse **6.**

Die Schneiden **10** sind vorzugsweise regelmäßig um die Hochachse **6** angeordnet. Die alleinige Anordnung der Schneiden **10** begründet eine sechszählige, eine dreizählige oder zweizählige Drehsymmetrie. Allerdings sind die Meißelkanten **11** unterschiedlich ausgebildet. Die Meißelkanten **11** von wenigstens drei der Schneiden **10** sind paarweise verschieden. Aufgrund der unterschiedlichen Meißelkanten **11** weist der Bohrkopf **2** trotz der regelmäßig angeordneten Schneiden **10** keine Drehsymmetrie auf. Die gestörte Drehsymmetrie erweist sich, insbesondere bei einem Durchmesser **13** von mehr als 20 mm, als vorteilhaft, um ein Taumeln des Bohrkopfs **2** in dem Bohrloch zu unterbinden.

Die Schneiden **10** sind monolithisch zusammenhängend, insbesondere ohne Fügezone durch Schweißen, Löten, Klemmen etc. miteinander verbunden. Der Bohrkopf **2** ist vorzugsweise aus einem Wolframkarbid-haltigem Material gesintert.

Die blattförmige Schneide **10** hat zwei gegenüberliegende Seitenflächen **14,** welche parallel oder im Wesentlichen parallel zu einander sind. Die Seitenflächen **14** sind vorzugsweise parallel zu der Hochachse **6** und verlaufen in radialer Richtung von der Hochachse **6** weg. Der Abstand zwischen den beiden Seitenflächen **14,** d.h. die Dicke der Schneide **10,** ist typischerweise deutlich geringer als die Abmessungen längs der Hochachse **6** und in radialer Richtung. Die Seitenflächen **14** können eben ausgebildet sein. Die Schneide **10** hat eine von der Hochachse **6** abgewandte Randfläche **15,** eine in die Schlagrichtung **8** weisende Stirnfläche **16** und eine entgegen der Schlagrichtung **8** weisende Unterseite **17.** Ein an die Hochachse **6** angrenzende, innerer Rand der Schneiden **10** existiert nur in geometrisch abstrakter Weise, da die inneren Ränder miteinander ohne Fügezone verbunden sind.

Die von der Hochachse **6** abgewandte, Randfläche **15** ist vorzugsweise parallel zu der Hochachse **6** orientiert. Die Randfläche **15** definiert mit ihrem radialen Abstand zu der Hochachse **6** den Durchmesser **13** des Bohrkopfs **2.** Die äußere Randfläche 15 bildet eine Abbruchkante **18,** welche beim Bohren an einer Bohrlochwand anliegt. Die Abbruchkanten **18** unterstützen das Ausbilden einer kreiszylindrischen Form des Bohrlochs durch Abbrechen von radial in das Bohrloch vorstehendem Gestein.

Die in Schlagrichtung **8** weisende, obere Stirnfläche **16** wird durch eine Spanfläche **19** und eine Freifläche **20** gebildet. Die Spanfläche **19** und die Freifläche **20** sind in radialer Richtung ausgedehnt. Die Spanfläche **19** und die Freifläche **20** erstrecken sich von angrenzend an die äußere Randfläche **15** bis zu der Hochachse **6** oder in die Nähe der Hochachse **6.** Die Spanfläche **19** ist gegenüber der Freifläche **20** in dem üblichen Drehsinn **9** des Bohrkopfs **2** vorauslaufend. Auf den Bohrkopf **2** blickend ist der übliche Drehsinn **9** entgegen dem Uhrzeigersinn. Die Spanfläche **19** und die Freifläche **20** sind gegenüber der Hochachse **6** geneigt. Die Spanfläche **19** steigt entgegen dem Drehsinn **9** in Schlagrichtung **8** an; die Freifläche **20** fällt entgegen dem Drehsinn **9** in Schlagrichtung **8** ab. Die Spanfläche **19** und die Freifläche **20** sind demzufolge zueinander geneigt. Ein Dachwinkel **21** zwischen der Spanfläche **19** und der Freifläche **20** ist größer als 45 Grad, beispielsweise größer als 60 Grad und geringer als 120 Grad. Der Dachwinkel **21** kann in radialer Richtung konstant oder sich ändernd sein.

Die Meißelkante **11** ist die Grenzlinie, an welcher die Spanfläche **19** und die Freifläche **20** zusammentreffen. Die Meißelkante **11** verläuft gleich der Spanfläche **19** und der Freifläche **20** in radialer Richtung, d.h. von der äußeren Randfläche **15** in Richtung zu der Hochachse **6.** Die beispielhaften Meißelkanten **11** der Schneiden **10** verlaufen im Wesentlichen geradlinig. In alternativen Ausführungen können die Meißelkante **11** spiralförmig auf die Hochachse **6** zulaufen.

Die Meißelkante **11** steigt von der äußeren Randfläche **15** in Richtung zu der Spitze **12** an. Der Verlauf des Anstiegs wird durch das Höhenprofil beschrieben. Das Höhenprofil ist ein Schnitt durch die Schneide **10** parallel zu der Hochachse **6** und dem Verlauf der Meißelkante **11** folgend. Bei den beispielhaft geradlinigen Meißelkante **11** verläuft das Höhenprofil in den Schnittebenen.

Bei dem beispielhaften Bohrkopf **2** können die Schneiden **10** in zwei Gruppen eingeteilt werden, welchen nachfolgend als Hauptschneiden **22** und Nebenschneiden **23** bezeichnet werden. Die Hauptschneiden **22** haben eine Meißelkante **11,** welche von der äußeren Randfläche **15** bis zu der Spitze **12** verläuft. Die Nebenschneiden **23** haben eine Meißelkante **24,** welche in einem radialen Abstand von der Spitze **12** endet. Die Meißelkante **24** wird nahe der Spitze **12** stumpf. Der Dachwinkel **21** zwischen den Spanfläche **19** und der Freifläche **20** nimmt in Richtung zu der Spitze **12** zu. Der Dachwinkel **21** wird größer als 120 Grad, erreicht beispielsweise 180 Grad. Die Meißelkante **24** endet an einer ebenen oder gewölbten Seitenfläche der Spitze **12.** Die Spitze **12** hat beispielsweise eine Tetraederförmige Gestalt. Die Kanten des Tetraeders werden durch die Meißelkanten **11** der Hauptschneiden **22** gebildet.

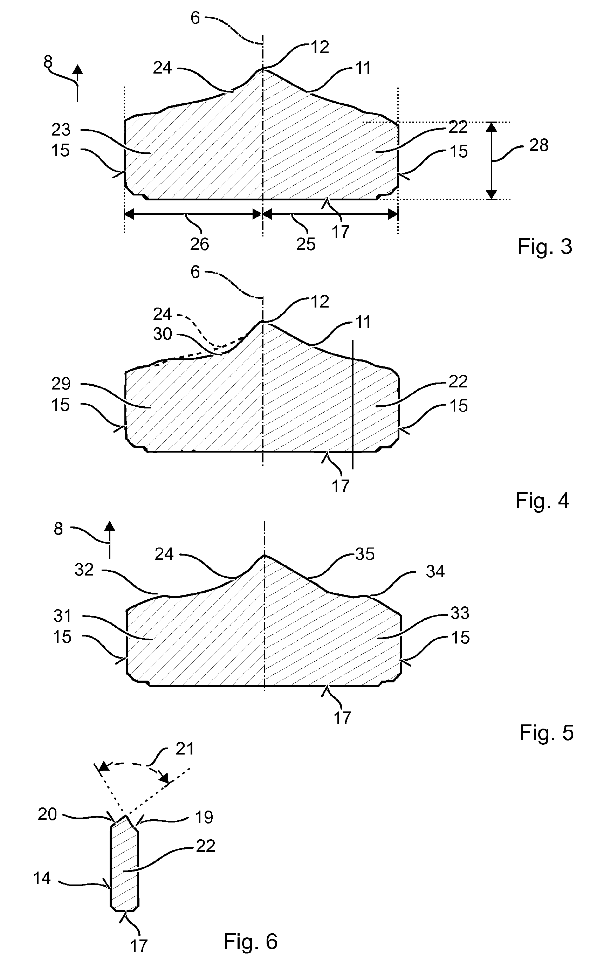

Die unterschiedlichen Höhenprofile von Hauptschneide **22** und Nebenschneide **23** sind beispielsweise in dem Querschnitt III-IIIin Fig. 3 zu sehen. Die zu der Hochachse **6** linke Hälfte zeigt das Höhenprofil einer Nebenschneide **23,** die zu der Hochachse **6** rechte Hälfte zeigt das Höhenprofil einer Hauptschneide **22.** Die beiden Höhenprofile unterscheiden sich markant, insbesondere nahe der Spitze **12.**

Die radialen Abmessung **25** der Hauptschneide **22** und die radialen Abmessung **26** der Nebenschneide **23** können gleich oder etwas verschieden sein. Die Hauptschneiden **22** und Nebenschneiden **23** sind vorzugsweise alternierend um die Hochachse **6** angeordnet. Die von den benachbarten Hauptschneiden **22** und Nebenschneiden **23** eingeschlossenen Winkel **27** sind vorzugsweise gleich.

Die Abmessung **28** entlang der Hochachse **6** von den Hauptschneiden **22** und von den Nebenschneiden **23** an den Randfläche **15** sind vorzugsweise gleich oder näherungsweise gleich.

Bei dem beispielhaften Bohrkopf **2** unterscheidet sich das Höhenprofil von wenigstens zwei Nebenschneiden **23, 29.** Fig.4 zeigt überlagert einen Schnitt in der Ebene IV-IV und gestrichelt einen Schnitt in der Ebene III-III, um die beiden Höhenprofile zu vergleichen. Die erste Meißelkante **24** in der Ebene III-IIIverläuft im Mittel oberhalb der zweiten Meißelkante **30** in der Ebene IV-IV. Die gestrichelte gezeichnete, erste Nebenschneide **23** und deren Höhenprofil, ist im Durchschnitt höher als die zweite Nebenschneide **29** bzw. deren Höhenprofil. Die erste Meißelkante **24** kann für einen kurzen Abschnitt unterhalb der zweiten Meißelkante **30** liegen; die erste Meißelkante **24** liegt jedoch für einen vergleichsweise längeren Abschnitt oberhalb der zweiten Meißelkante **30.** Der Bohrkopf **2** weist somit drei paarweise verschiedene Schneiden **10** auf: die beiden erwähnten Nebenschneiden **23, 29** sind zueinander verschieden, ebenso ist jede der beiden Nebenschneiden **23, 29** verschieden zu den Hauptschneiden **22.** Die beiden Hauptschneiden **22** können in den beiden Schnitten gleich oder nahezu gleich sein.

Die Nebenschneide **23** hat vorzugsweise ein kontinuierlich von der äußeren Randfläche **15** zu der Spitze **12** in Schlagrichtung **8** ansteigendes Höhenprofil. Ein Höhenprofil einer dritten Nebenschneide **31** kann ein lokales Maximum **32** in dem Höhenprofil aufweisen (Fig. 5). Die beiden Nebenschneiden **23, 31** unterscheiden sich in dem Verlauf ihrer Höhenprofile, d.h. ohne lokalem Maximum bzw. mit einem lokalen Maximum. Vorzugsweise ist die zweite Nebenschneide **23** mit einem kontinuierlich ansteigenden Höhenprofil versehen, d.h. ohne lokales Maximum. Die Hauptschneiden **22** in den Schnitten III-III, V-V können gleich ausgebildet sein.

Bei dem beispielhaften Bohrkopf **2** unterscheiden sich die Hauptschneiden **22, 33** in den Schnittebenen III-IIIund V-V. Die erste Hauptschneide **22** weist ein kontinuierlich zu der Spitze **12** hin ansteigendes Höhenprofil auf, d.h. kein lokales Maximum. Die zweite Hauptschneide **33** zeigt ein lokales Maximum **34** in dem Höhenprofil. Die beiden unterschiedlichen Höhenprofile der Hauptschneiden **22, 33** machen die zugehörigen Schneiden **10** verschieden, ferner sind die Hauptschneiden **22** zu wenigstens einer der Nebenschneiden **23** verschieden, in Summe sind somit wenigstens die drei Schneiden **10** paarweise verschieden. Die dritte Hauptschneide **22** ist vorzugsweise mit einem kontinuierlich ansteigenden Höhenprofil versehen.

Der Bohrkopf **2** kann mit zwei unterschiedlichen Hauptschneiden **22** oder mit zwei unterschiedlichen Nebenschneiden **23** oder mit sowohl zwei unterschiedlichen Hauptschneiden **22** und zwei unterschiedlichen Nebenschneiden **23** ausgebildet sein. Der beispielhaft dargestellt Bohrkopf **2** hat im Wesentlichen fünf paarweise verschiedene Meißelkanten **11, 35,** zwei der Hauptschneiden **22** sind identisch. Ein Bohrkopf **2** kann auch mit drei identischen Hauptschneiden **22** und drei paarweise verschiedenen Nebenschneiden **23** ausgebildet werden.

Die drei Hauptschneiden **22** haben vorzugsweise den gleichen Querschnitt in einer Draufsicht, d.h. die gleiche radiale Abmessung und die gleiche Abmessung in Drehrichtung. Die Hauptschneiden **22** unterscheiden sich gegebenenfalls einzig in der oberen Stirnfläche **16,** d.h. der Meißelkante **11,** insbesondere in dem Höhenprofil.

Die drei Nebenschneiden **23** haben vorzugsweise den gleichen Querschnitt in einer Draufsicht, d.h. die gleiche radiale Abmessung und die gleiche Abmessung in Drehrichtung. Die Nebenschneiden **23** unterscheiden sich gegebenenfalls einzig in der oberen Stirnfläche **16,** d.h. der Meißelkante **24,** insbesondere in dem Höhenprofil.

Ein alternativer Bohrkopf **2** für Bohrer **1** mit großem Durchmesser **13** hat fünf Schneiden **10.** Die fünf Schneiden **10** sind in äquidistanten Winkeln von 72 Grad um die Hochachse **6** angeordnet. Drei der Schneiden **10** sind Hauptschneiden **22** mit an der Spitze **12** zusammenlaufenden Meißelkanten **11.** Zwei der Schneiden **10** sind Nebenschneiden **23** mit vor der Spitze **12** endenden Meißelkanten **30.** Zwei der Hauptschneiden **22** unterscheiden sich in ihrem Höhenprofil.

Die äußere Randfläche **15** bildet Abbruchkanten **18,** welche parallel zu der Bohrerachse **6** verlaufen. Die Abbruchkanten **18** gehen in die Meißelkanten **11** über. Die Abbruchkanten **18** definieren den Durchmesser des Bohrkopfs **2.** Die Anzahl der Abbruchkanten **18** ist gleich der Anzahl der Meißelkanten **11.** Die Abbruchkanten **18** haben eine im Drehsinn **9** vorauslaufende Flanke **36** und eine im Drehsinn **9** nachfolgende Flanke **37.** Die Flanken **36, 37** sind beide im Wesentlichen parallel zu der Bohrerachse **6.** Während die vorauslaufende Flanke **36** vorzugsweise über ihre Abmessung im Drehsinn **9** einen zu der Bohrerachse **6** gleichbleibenden radialen Abstand zu der Bohrerachse **6** hat, verringert sich der radiale Abstand der nachlaufenden Flanke **37** im Drehsinn **9.**

Die entgegen der Schlagrichtung **8** weisende, untere Unterseite **17** wird an dem Förderabschnitt **3** befestigt. Beispielsweise kann die Unterseite **17** verlötet, verschweißt oder in anderer geeigneter Weise mit dem typischerweise stählernen Förderabschnitt **3** verbunden sein. Die Unterseite **17** kann eben, beispielsweise senkrecht zu der Hochachse **6** sein. Die Unterseite des Bohrkopfs **2** gebildet aus den Unterseiten **17** hat eine dreizählige Drehsymmetrie.

Der Förderabschnitt **3** des beispielhaften Bohrers **1** ist durch eine Wendel **7** gebildet. Die Wendel **7** ist rechtsläufig. Die Wendel **7** bewegt somit das Bohrgut entgegen der Schlagrichtung **8,** wenn der Bohrkopf **2** in dem für ihn vorgesehenen Drehsinn **9,** d.h. im Gegenuhrzeigersinn, gedreht wird. Ein alternativer zylindrischer Förderabschnitt hat einen Kanal über den das Bohrgut mit einer Pumpe abgesaugt wird.

Die Wendel **7** des Bohrers **1** hat beispielsweise vier Wendelstege **38.** Die Anzahl der Wendelstege **38** ist vorzugsweise gleich der Anzahl der Meißelkanten **11.** Die Wendelstege **38** laufen längs der Bohrerachse **6** mehrfach um diese Bohrerachse **6** um. Die Wendelstege **38** beschreiben beim Drehen des Bohrers **1** eine zylindrische Einhüllende, deren Durchmesser einem Wendeldurchmesser entspricht. Der Durchmesser ist vorzugsweise etwas geringer als der Durchmesser **13** des Bohrkopfs **2.** Jeweils benachbarte Wendelstege **38** schließen zwischen sich eine Wendelnut **39** ein, die in radialer Richtung durch die Einhüllende als geometrisch begrenzt angesehen wird. Das Bohrgut wird in den Wendelnuten **39** durch die Wendelstegen **38** längs der Bohrerachse **6** transportiert. Eine Wendelsteigung **40** liegt vorzugsweise im Bereich zwischen 35 Grad und 60 Grad, z.B. 45 Grad.

Der Förderabschnitt **3** kann in einer anderen Ausgestaltung durch ein hohles Rohr gebildet sein, durch welches das Bohrgut mittels einer Pumpe abgesaugt wird. Das Rohr hat typischerweise die gleichen Außenabmessungen wie die zuvor beschriebene und dargestellte Wendel **7.**

Das beispielhafte Einsteckende **4** des Bohrers **1** ist für die Verwendung von drehmeißelnden Handwerkzeugmaschinen ausgelegt. Das Einsteckende **4** hat eine im Wesentlichen zylindrische Form. Das Einsteckende **4** hat zwei geschlossene Nuten **41,** in welchen Verriegelungselemente der Handwerkzeugmaschine radial eingreifen und längs der Bohrerachse **6** gleiten können. Zur Bohrerachse **6** längs ausgerichtete Rillen **42** ermöglichen ein Einleiten eines Drehmoments von der Handwerkzeugmaschine.

## Patentansprüche

1. Bohrkopf (2) mit
einer Spitze (12),
einer durch die Spitze (12) verlaufende Hochachse (6),
wenigstens vier Schneiden (10), die jeweils eine Meißelkante (11) aufweisen,
wobei die Meißelkanten (11) von wenigstens drei der Schneiden (10) paarweise verschieden sind.

2. Bohrkopf (2) nach Anspruch 1, **dadurch gekennzeichnet, dass** Höhenprofile entlang der Meißelkanten (11) der wenigstens drei Schneiden (10) paarweise verschieden sind.

3. Bohrkopf (2) nach Anspruch 2, **dadurch gekennzeichnet, dass** die Schneiden (10) in äquidistanten Winkeln (27) um die Hochachse (6) angeordnet sind.

4. Bohrkopf (2) nach einem der vorhergehenden Ansprüche, **dadurch gekennzeichnet, dass** der Bohrkopf (2) wenigstens zwei Hauptschneiden (22) und wenigstens zwei Nebenschneiden (23) aufweist, wobei die Meißelkante (11) der Hauptschneiden (22) bis zu der Spitze (12) verläuft und die Meißelkante (24) der Nebenschneide (23) in einem radialen Abstand von der Spitze (12) endet.

5. Bohrkopf (2) nach Anspruch 4, **dadurch gekennzeichnet, dass** zwei der Nebenschneiden (23) eine unterschiedliche Meißelkante (24) aufweisen.

6. Bohrkopf (2) nach Anspruch 4 oder 5, **dadurch gekennzeichnet, dass** eine der Nebenschneiden (23) im Mittel gegenüber einer anderen der Nebenschneiden (23) längs der Hochachse (6) versetzt ist.

7. Bohrkopf (2) nach Anspruch 4, **dadurch gekennzeichnet, dass** zwei der Hauptschneiden (22) eine unterschiedliche Meißelkante (11) aufweisen.

8. Bohrkopf (2) nach Anspruch 4 oder 7, **dadurch gekennzeichnet, dass** eine der Hauptschneiden (22) im Mittel gegenüber einer anderen der Hauptschneiden (22) längs der Hochachse (6) versetzt ist.

9. Bohrkopf (2) nach einem der vorhergehenden Ansprüche, **dadurch gekennzeichnet, dass** der Bohrkopf (2) genau fünf oder genau sechs Schneiden (10) aufweist.

10. Bohrkopf (2) nach einem der vorhergehenden Ansprüche, **dadurch gekennzeichnet, dass** die Meißelkanten (11) geradlinig sind.

11. Bohrer (1) mit einem Bohrkopf (2) nach einer der vorhergehenden Ansprüche, einem Förderabschnitt (3), einem Einsteckende (4) mit einer Schlagfläche (5) zum Einleiten von Stoßwellen in den Bohrer (1).
